# EUROPEAN PATENT SPECIFICATION

(11) **EP 2 796 272 B1**
(45) Date of publication and mention of the grant of the patent: **08.02.2017**
(21) Application number: 11878079.0
(22) Date of filing: 20.12.2011
(51) Int. Cl.: B29C 65/36, B29C 65/04, B29C 65/56, B29C 65/72, B29K 105/06

(54) **METHOD FOR CONNECTING MEMBERS**
VERFAHREN ZUM VERBINDEN VON TEILEN
PROCÉDÉ POUR CONNECTER DES ÉLÉMENTS

(43) Date of publication of application: 29.10.2014
(73) Proprietor: TOYOTA JIDOSHA KABUSHIKI KAISHA, Toyota-shi, Aichi-ken, 471-8571 (JP)
(72) Inventor: URAYAMA Hiroshi, Toyota-shi Aichi-ken, 471-8571 (JP)
(74) Representative: Kuhnen & Wacker
(86) International application number: PCT/JP2011/079431
(87) International publication number: WO 2013/094008

(56) References cited:
- EP-A2- 0 281 347
- JP-A- H03 248 832
- JP-A- H06 509 293
- JP-A- 2007 229 980
- JP-A- 2009 073 132
- JP-A- 2010 516 494
- US-A- 4 978 825
- US-A- 5 240 542
- BORDER ET AL: "Induction Heated Joining of Thermoplastic Composites Without Metal Susceptors", 34TH INTERNATIONAL SAMPE SYMPOSIUM, MAY 8-11, 1989,, 8 May 1989 (1989-05-08), pages 2569-2578, XP009180883,

## Description

### Technical Field

The present invention relates to a method for connecting two or more members together at a position of superposition. Further, a connection structure is disclosed. In particular, the present invention relates to a method for connecting members together, at least one of the members for forming the position of superposition being a fiber reinforced resin member containing a matrix resin and also containing a reinforcing fiber material in the matrix resin. Further, a connection structure of members formed by such a method is disclosed.

### Background Art

A fiber reinforced resin member (i.e., fiber reinforced plastic (FRP)) that contains a resin and also contains a reinforcing fiber material in the resin is used in various industrial fields, such as an automobile industry, construction industry, and airline industry, by virtue of its lightweight and high strength.

For connection of fiber reinforced resin members together, a connection method using an adhesive, a connection method using a bolt, a combination of such connection methods, or the like is commonly used.

Meanwhile, for connection of metal members, such as an aluminum plate and a steel plate, together, a connection method using spot welding, friction-stir welding, mechanical clinching, brazing, screwing, self-piercing riveting, or the like is commonly used.

Further, for connection of a fiber reinforced resin member and a metal member together, that is, for connection of dissimilar members together, connection is carried out using one of the aforementioned methods, or two or more of them in combination.

The aforementioned connection methods that have been used so far for connection of so-called similar members together, such as connection of fiber reinforced resin members together or connection of metal members together, or for connection of so-called dissimilar members together, such as connection of a fiber reinforced resin member and a metal member together, have various problems. Specifically, there are problems in that when an adhesive is used, it takes a long time for adhesion, and when a bolt, screwing, self-piercing riveting, or the like is used, a connecting part is necessary; thus, the production time would increase or the production cost associated with the connecting part would increase.

In particular, when members with three-dimensionally complicated shapes are connected together using a connecting part such as a bolt, it would be not easy to handle alignment between the members to be connected together, and thus, complicated assembly procedures would be needed to connect the members together using the connecting part. Meanwhile, when a connection method using adhesion or welding is used, it is easily understood that it is quite difficult to uniformly apply an adhesive to or uniformly apply heat to all of the portions to be connected that are three-dimensionally complicated (at a position of superposition) as soon as possible.

Herein, Patent Literature 1 discloses a method for connecting members together using non-contact heat plate welding after applying an antioxidant to a joint portion.

According to such a connection method, it may be possible to form a joint portion with small variations in strength. However, since heating is conducted in the air, heat transfer efficiency is low and it thus takes a long time to join the members together through heating. Thus, the aforementioned problem cannot be solved. Further, even when such a connection method is used, it is still quite difficult to uniformly apply heat to all of the portions to be connected that have three-dimensionally complicated shapes (at a position of superposition) as soon as possible.

Thus, in order to connect two or more members together at a position of superposition, for example, to connect members having three-dimensionally complicated portions to be connected together, there has been sought an invention of a method for connecting members together that can easily form a connection structure having about the same high level of connection strength over the entire range of the position of superposition.

Moreover, Patent Literature 2 relates to the bonding of thermoplastic layers and discloses a method of bonding a thermoplastic layer, such as APC-2, to a substrate in which the thermoplastic layer comprises electrical conductors such as carbon fibers, embedded in thermoplastic material such as PEEK.

Patent Literature 3 relates to the joining of composite materials by induction heating and discloses that two pieces of composite material are simultaneously joined together throughout an interface between the two pieces, by induction heating the interface region with an induction coil placed, at least in part, adjacent to the bonding region, and forcing the composite material at the interface together while heating.

Patent Literature 4 relates to a thermoplastic composite induction welder and discloses that an induction heating of thermoplastic composite materials is accomplished to form a continuous bonded joint.

Patent Literature 5 relates to an FRP joint structure and the provision of an FRP joint structure which develops excellent joining strength, has excellent productivity and can prevent the damage of an FRP member in the joint part.

Non-Patent Literature 1 relates to induction heated joining of thermoplastic composites without metal susceptors and describes experiments relating to the same.

### Citation List

### Patent Literature

Patent Literature 1: JP 2010-228798 A
Patent Literature 2: EP 0 281 347 A2
Patent Literature 3: US 5 240 542 A
Patent Literature 4: US 4 978 825 A
Patent Literature 5: JP 2007 229980 A

### Non-Patent Literature

Non-Patent Literature 1: BORDER ET AL: "Induction Heated Joining of Thermoplastic Composites Without Metal Susceptors", 34TH INTERNATIONAL SAMPLE SYMPOSIUM, MAY 8-11, 1989, 8 May 1989 (1989-05-08), pages 2569-2578, XP009180883

### Summary of Invention

### Technical Problem

The present invention has been made in view of the foregoing problems, and it is an object of the present invention to provide a method for connecting members together that can easily form a connection structure, which has about the same high level of connection strength over the entire range of the position of superposition, in a short time. Further, a connection structure is disclosed.

### Solution to Problem

In order to achieve the aforementioned object, the method for connecting members together in accordance with the present invention is a method for connecting members together, the method being adapted to connect two or more members together, at least one of which is a fiber reinforced resin member containing a thermoplastic resin and also containing a reinforcing fiber material that serves as a heating element in the thermoplastic resin, at a position of superposition. The method includes pressing the members against each other while heating the members at a position of superposition using one of induction heating or dielectric heating and thus melting the thermoplastic resin with heat generated from the fiber material that serves as the heating element, thereby connecting the members together.

The method for connecting members together of the present invention is a method for connecting members, the method being adapted to connect two or more members together, at least one of which is a fiber reinforced resin member containing a thermoplastic resin and also containing a reinforcing fiber material that serves as a heating element in the thermoplastic resin, at a position of superposition.

Thus, examples of a combination of the members to be connected together include the following. One example is a configuration in which each of two members is a fiber reinforced resin member, or a configuration in which one of the two members is a fiber reinforced resin member and the other is a resin member not containing a fiber material. Another example is a configuration in which one of the two members is a metal member and the other is a dissimilar member such as a fiber reinforced resin member, a configuration in which one or two of three or more members is/are a fiber reinforced resin member(s) and the other(s) is/are resin member(s) not containing a fiber material or a metal member(s), or a configuration in which all of three or more members are fiber reinforced resin members. It should be noted that when three members to be connected are connected together and only one of them is a fiber reinforced resin member, the fiber reinforced resin member is arranged in the middle of the three members.

Examples of the fiber reinforced resin member include a member containing a thermoplastic resin and also containing long fibers or short fibers in random order in the thermoplastic resin, for example, a unidirectional material (UD material) in which continuous fibers of over 50 mm are unidirectionally oriented in a thermoplastic resin as defined by JIS, or a quasi-isotropic material (e.g., a multi-axial laminate or a woven fabric made of warps and wefts). Examples of its application include a frame structure member of a vehicle, such as a front side member, a center cross member, a pillar, a locker, or a floor of the body, and a non-structural member, such as a door outer panel or a hood that requires a unique design. When a fiber reinforced resin member is applied to a frame structure member of a vehicle or the like, it is possible to produce a fuel-efficient, environmentally-friendly vehicle while ensuring strength and lightweight.

Examples of a thermoplastic resin for forming a fiber reinforced resin member include crystalline plastic such as polyamide (PA) and polypropylene (PP) and amorphous plastic such as polystyrene (PS) and polyvinyl chloride (PVC).

One of the features of the connection method of the present invention is that a thermoplastic resin of a fiber reinforced resin member, which is a member to be connected, contains a fiber material for reinforcement that can serve as a heating element.

The fiber material that serves as a heating element is heated using one of induction heating or dielectric heating, whereby the heating element is caused to generate heat, and the surrounding thermoplastic resin is melted with the heat. Accordingly, when the fiber material is evenly dispersed in the thermoplastic resin, it is possible to evenly melt the fiber reinforced resin member in the entire range of the position of superposition.

Before or after the thermoplastic resin is melted, pressure is continuously applied to the members at the position of superposition for a predetermined period of time to harden the interface of the melted fiber reinforced resin member, whereby the members can be connected together.

When such a connection method is used, the heating element, which is contained in the fiber reinforced resin member in advance, is caused to generate heat, and the thermoplastic resin is melted with the heat. Thus, a separate connecting part is not necessary at all.

Since heating is conducted using one of induction heating or dielectric heating, each of such heating methods allows a relatively wide range of area to be heated to about the same degree, and thus allows the fiber material, which serves as a heating element, in the entire range of the portion of superposition to be heated to about the same degree without being influenced by the shapes of the members at the position of superposition. Thus, even when the members at the position of superposition exhibit three-dimensionally complicated shapes, connection can occur with about the same high level of connection strength over the entire range of the position of superposition.

The term "induction heating" herein is a method of arranging the position of superposition of members within or around a coil that is connected to an AC power supply and flowing current through the coil, thereby causing high-density current (eddy current) to be generated in the heating element through electromagnetic induction, and thus causing the heating element to generate heat with the Joule heat.

Meanwhile, the term "dielectric heating" is a method of arranging the position of superposition of members within an AC electric field with a high frequency of several MHz to several hundred MHz, thereby causing the heating element to generate heat through the action of the high frequency (electromagnetic waves). It should be noted that heating conducted with electromagnetic waves with a frequency of 1 MHz to 200 MHz is referred to as high-frequency dielectric heating, and heating conducted with electromagnetic waves with a lower frequency band that that is referred to as microwave heating.

In addition to induction heating and dielectric heating, a heating method such as ultrasonic welding or hot plate vibration heating may also be used. Such methods are adapted to generate frictional heat by providing vibration to the connection planes of the members to be connected together, thereby connecting the members to be connected together with the frictional heat. Therefore, a large frictional force or pressure acts around the interface between the members to be connected together, which is disadvantageous in that blurs are likely to be generated. In contrast, when induction heating or dielectric heating is used, heat is allowed to be generated from the inside of the members to be connected together. Therefore, the time needed for melting can be short. Further, since connection can be carried out with less pressure, a problem that many blurs may be generated at the interface cannot occur.

For the fiber material that serves as a "heating element," one of carbon fibers, metal fibers, or ceramic fibers, or a mixture of two or more of them can be used.

Herein, examples of carbon fibers include graphite. Examples of metal fibers include a Ni-Cr alloy, a Fe-Cr-Al alloy, molybdenum, tungsten, and platinum. Examples of ceramic fibers include SiC (silicon carbide) and MoSi₂ (molybdenum disilicide).

The aforementioned method for connecting members together of the present invention employs a novel and simple connection method that includes pressing a plurality of members to be connected together, at least one of which is a fiber reinforced resin member containing a thermoplastic resin and also containing a fiber material that serves as a heating element in the thermoplastic resin, against each other at a position of superposition while heating the members using one of induction heating or dielectric heating. Accordingly, the members can be connected together with a connection structure having about the same high level of connection strength over the entire range of the position of superposition without being influenced by the shapes of the members at the position of superposition. It should be noted that although a connection part is not necessary, the connection method of the present invention may also be combined with the use of an adhesive, a bolt, or the like as needed, so that a connection structure can be formed through a combination of such methods as appropriate.

Further, according to the embodiment of a method for connecting members together of the present invention, two or more members are temporarily joined together at a position of superposition using a self-piercing rivet before heating is applied to the members at the position of superposition. Then, the thermoplastic resin is melted through heating, and pressure is applied thereto.

When the members to be connected together have large dimensions, it becomes possible to eliminate the need to use a large jig for holding the whole members by modifying warps and deformations of the members to be connected together before connecting them. Thus, it is possible to facilitate the connection processing and produce a connection structure having a high level of connection strength over the entire range of the position of superposition.

In addition, when a self-piercing rivet is used for the temporary joint, the self-piercing rivet also serves as a heating element. Thus, melting of the thermoplastic resin can be promoted, which leads to a further reduction in the production time.

Further, a connection structure of members is disclosed, and such connection structure is a connection structure of two or more members, at least one of which is a fiber reinforced resin member containing a thermoplastic resin and also containing a reinforcing fiber material that serves as a heating element in the thermoplastic resin, connected together at a position of superposition. The connection structure is formed by pressing the members against each other while heating the members at the position of superposition using one of induction heating or dielectric heating and thus melting the thermoplastic resin with heat generated from the fiber material that serves as the heating element.

In the connection structure, the members are directly connected together without other members or additives for connecting the members interposed between the members at the position of superposition.

### Advantageous Effects of Invention

As can be understood from the foregoing description, according to the method for connecting members together of the present invention, a plurality of members to be connected together, at least one of which is a fiber reinforced resin member containing a thermoplastic resin and also containing a fiber material that serves as a heating element in the thermoplastic resin, are pressed against each other at a position of superposition while heat is applied thereto using one of induction heating or dielectric heating, whereby a connection structure having about the same high level of connection strength over the entire range of the connection portion can be easily formed in a short time.

### Brief Description of Drawings

[Fig. 1] Fig. 1 is a diagram illustratinga method for connecting members together.
[Fig. 2] Fig. 2 is a schematic diagram showing a connection structure formed in the connection method.
[Fig. 3] Fig. 3 is a diagram illustrating an Embodiment of a method for connecting members together.
[Fig. 4] Fig. 4 is a diagram illustrating the Embodiment of the connection method, following Fig. 3.
[Fig. 5] Fig. 5 is a schematic diagram illustrating a connection structure formed in the Embodiment of the connection method.

### Description of Embodiments

Hereinafter, the embodiment of a method for connecting members together of the present invention will be described with reference to the drawings. Although the examples shown in the drawings illustrate methods for connecting two fiber reinforced resin members together, it is needless to mention that three or more members to be connected may also be connected together using the methods shown in the drawings. Further, it is also needless to mention that a configuration for connecting a fiber reinforced resin member and a resin member not containing a fiber material, and a configuration for connecting a fiber reinforced resin member and a metal member may also be used.

### (Method for Connecting Members Together and Connection Structure)

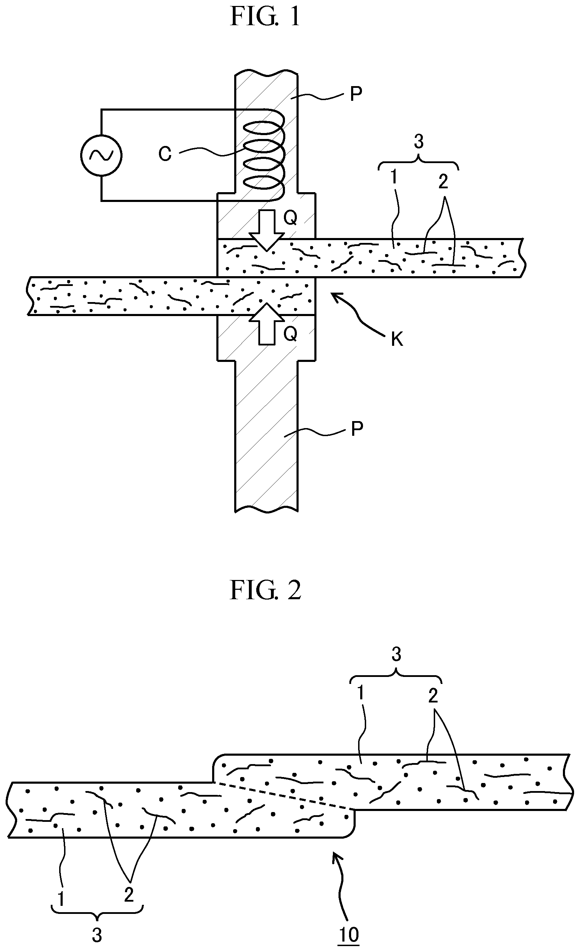

Figs. 1 and 2 are sequential flow diagrams illustrating a method for connecting members together.

First, two fiber reinforced resin members 3, which are members to be connected together, are prepared. Each fiber reinforced resin member 3 contains a matrix resin, which is a thermoplastic resin 1, and also contains a fiber material 2, which is adapted to reinforce the member and serves as a heating element that can generate heat from heat provided thereto, in the thermoplastic resin 1.

It should be noted that the shape of the fiber reinforced resin member 3 may be, in addition to a planar shape shown in the drawing, a variety of shapes and configurations including a three-dimensional shape (i.e., a curved shape, a wavy shape, or a unitary shape of curves and planes).

Herein, for the thermoplastic resin 1, it is possible to use one of crystalline plastic such as polyethylene (PE), polypropylene (PP), polyamide (PA, for example, Nylon 6 or Nylon 66), polyacetal (POM), or poly(ethyleneterephthalate) (PET); amorphous plastic such as polystyrene (PS), polyvinyl chloride (PVC), poly methyl methacrylate (PMMA), ABS resin, or thermoplastic epoxy; or a material containing a mixture of two or more of them.

For the fiber material 2 that serves as a heating element, it is possible to use one of carbon fibers including graphite; metal fibers such as an Ni-Cr alloy, a Fe-Cr-Al alloy, molybdenum, tungsten, or platinum; ceramic fibers such as SiC (silicon carbide) or MoSi₂ (molybdenum disilicide); or a mixture of two or more of them.

The fiber material 2 may be either short fibers or long fibers, or further, continuous fibers. For example, a fiber reinforced resin member 3 that contains a 10 to 50 volume % fiber material 2 with respect to the entire volume of the member can be used. Needless to say, when continuous fibers are used, heat of the fiber material at a position of superposition can be transferred to regions other than the position of superposition. Thus, short fibers with a length not more than 10 mm, or long fibers with a length not more than 30 mm are desirably used as the fiber material to be used.

The two fiber reinforced resin members 3,3 are partially superposed one on top of the other so as to form a position of superposition K, and then, the attitudes of the fiber reinforced resin members 3,3 are held with a jig (not shown). Then, a punch P is disposed at the top and bottom positions corresponding to the position of superposition K, and further, an induction coil C arranged in a circuit, which has an AC power supply above the position of superposition K, is disposed.

Next, current is allowed to flow through the induction coil C while pressure Q is applied at the position of superposition K with the punches P,P above and below the position of superposition K, whereby high-density current (eddy current) is generated in the fiber material 2, which serves as a heating element, through electromagnetic induction, and the resulting Joule heat causes the fiber material 2 to generate heat (i.e., a method using induction heating).

With the heat generated from the fiber material 2, the surrounding thermoplastic resin 1 is melted, and the members at the position of superposition K firmly adhere to each other with the pressure Q applied thereto, and then, the melted thermoplastic resin 1 hardens and the two members are welded together. Thus, a connection structure 10 of the members that has high connection strength due to welding is formed as shown in Fig. 2.

As described above, the material of the fiber material 2 and the material of the thermoplastic resin 1 are selected so that the thermoplastic resin 1 is melted by the heat generation temperature of the fiber material 2 that serves as a heating element.

When the entire length of the position of superposition K is long, it is possible to construct a production system that allows the induction coil C to freely move above the position of superposition K, and employ a method of melting the thermoplastic resin 1 in the entire range of the position of superposition K while sequentially running the induction coil C.

Even when the entire length of the position of superposition K is long or the member at the position of superposition K (and the entire fiber reinforced resin member 3) exhibits a three-dimensionally complicated shape, the thermoplastic resin 1 softens in the entire range of the position of superposition K as long as the fiber material 2 is evenly dispersed in the fiber reinforced resin member 3. Then, the two members are firmly welded together, whereby a connection structure having about the same level of connection strength over the entire range of the position of superposition K can be formed.

It should be noted that a method using dielectric heating may also be used besides the method using induction heating.

According to the connection method shown in the drawing, it is possible to connect members with the connection structure 10 having about the same high level of connection strength over the entire range of the position of superposition K without being influenced by the shapes of the members at the position of superposition K, without requiring a connecting part.

In addition, such a connection method is an extremely simple connection method that includes superposing members one on top of the other, and heating the fiber material 2, which is a heating element, at the position of superposition using a method such as induction heating while applying pressure thereto, thereby melting the surrounding thermoplastic resin 1. Therefore, processing efficiency can be significantly improved without requiring a high level of processing skill, and connection of the members can be attained in a short time.

### (Embodiment of Method for Connecting Members Together and Connection Structure)

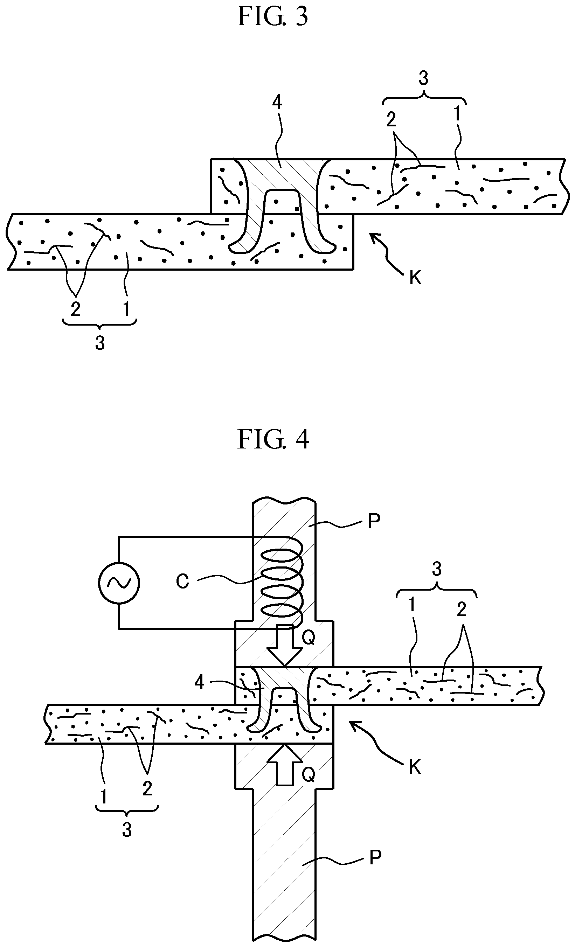

Figs. 3 to 5 are sequential flow diagrams illustrating the Embodiment of a method for connecting members together of the present invention.

The connection method shown herein is a method that is suitable for a case where the fiber reinforced resin members 3, which are members to be connected together, have relatively large dimensions.

When the fiber reinforced resin members 3, which are members to be connected together, have relatively large dimensions, the fiber reinforced resin members 3,3 often have no mutually-complementary warps or deformations. When the two materials are attempted to be connected together with such warps or deformations left, it would be impossible to form a position of superposition with high accuracy, and consequently, it becomes impossible to form a connection structure having about the same level of connection strength over the entire range of the position of superposition.

Thus, first, a self-piercing rivet 4 is driven at the position of superposition K from above as shown in Fig. 3 so that the two members are temporarily joined together. Then, warps or deformations are forcibly modified to form a position of superposition K where the members are tightly attached to each other.

The self-piercing rivet 4 used herein has a circular end face in a planar view, and exhibits a portal shape in a longitudinal sectional view of a cylindrical body that protrudes from the end face. The self-piercing rivet 4 is formed from aluminum, an aluminum alloy, steel, stainless steel, or the like.

The members at the position of superposition K are put on a rivet dice (not shown), and a punch is caused to slide within a cylinder (not shown), so that the self-piercing rivet 4 is pushed into the members at the position of superposition K with the punch. Accordingly, in the process in which the body of the self-piercing rivet penetrates into the members at the position of superposition K, the self-piercing rivet opens outward through plastic deformation while receiving pressure from the inside thereof, whereby the members at the position of superposition K are temporarily joined together.

When the self-piercing rivet 4 is used for the temporary joint as described above, the self-piercing rivet 4 made of metal also serves as a heating element. Thus, melting of the thermoplastic resin 1 is further promoted, and a further reduction in the production time can be achieved.

Though not shown, spot joining through ultrasonic spot welding may also be used as the method for temporarily joining the members together at the position of superposition K, besides the self-piercing riveting. According to such a method, it is possible to form the position of superposition K where the members are tightly attached to each other by forcibly modifying warps or deformations of the members without using another member, as in self-piercing riveting.

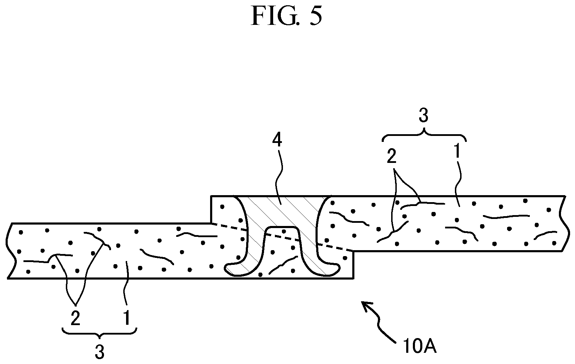

After the members are temporarily joined together at the position of superposition K with the self-piercing rivet 4, a magnetic field is caused to be generated by allowing current to flow through the induction coil C while applying pressure Q at the position of superposition K with punches P,P above and below the position of superposition K, and the fiber material 2 is caused to generate heat with the Joule heat as shown in Fig. 4, which shows substantially the same method as the afore mentioned connection method. Then, the surrounding thermoplastic resin 1 is melted with the heat generated from the fiber material 2, and the members at the position of superposition K are firmly attached to each other with the pressure Q applied thereto, and then, the melted thermoplastic resin 1 hardens. Thus, a connection structure 10A of the members that has high connection strength due to welding is formed as shown in Fig. 5.

### [Experiment of measuring tensile shearing strength for each connection configuration and result thereof]

The inventors created a variety of test pieces in accordance with the following examples and comparative examples by using two sheet materials of TEIJIN LIMITED (with a long side of 100 mm × a short side of 25 mm × a thickness of 2 mm in planar dimensions) each containing a matrix resin as a thermoplastic resin (PA6) and also containing carbon fibers (a carbon fiber content of Vf 30) in the thermoplastic resin, and superposing the two sheet materials one on top of the other, with a long side in the range of 10 mm as a region of superposition. Table 1 shows the detailed conditions and experimental result of each example and comparative example.

### (Examples 1 and 2)

Each of test pieces in accordance with Examples 1 and 2 is obtained by welding two sheet materials together through induction heating. An electromagnetic induction oscillator (UH 2.5K) of SEIDENSHA ELECTRONICS CO., LTD. was used, and an oscillation coil in spiral form was used.

A test piece was produced by placing a PBT plate with a predetermined thickness to provide a gap on the oscillation coil, and disposing the sheet materials at a position of superposition on the plate, and further applying pressure thereto from above using a metal bar for 60 seconds, and then releasing the pressure. Examples 1 and 2 differ in the gap (i.e., gap from the coil) and the current value as shown in Table 1.

### (Comparative Example 1)

A test piece was produced by applying a flame treatment to sheet materials at a position of superposition, applying Primer M (RC-50E, product of The Yokohama Rubber Company, Limited) thereto, applying an adhesive Mighty Grip 5000/5030 (a product of Emulsion Technology Co., Ltd., a mixing ratio of 2:1) between the sheet materials, fixing the sheet materials with a clip, and applying a thermal treatment thereto at 60 °C for 90 minutes in an oven to harden the adhesive.

The "flame treatment" herein is a treatment for destroying molecular bonds on the surface of plastic with the heat of flame plasma irradiation, and then embedding part of oxygen in the flame into the molecular bonds.

### (Comparative Example 2)

A test piece was produced by applying a flame treatment to sheet materials at a position of superposition, applying Primer M (RC-50E, product of The Yokohama Rubber Company, Limited) thereto, applying an adhesive DENATITE 3327SR (a product of Nagase ChemteX Corporation) between the sheet materials, fixing the sheet materials with a clip, and applying a thermal treatment thereto at 60 °C for 90 minutes in an oven to harden the adhesive.

### (Test Method)

As a testing device, Model 5582 of Instron was used, and the maximum load (kN) as well as the tensile shearing strength (MPa) at that time was measured at a tension speed of 5 mm/minute and an inter-chuck distance of 100 mm.

**[Table 1]**

| | Unit | Example 1 | Example 2 | Comparative Example 1 | Comparative Example 2 |
|---|---|---|---|---|---|
| Connection Method | | Induction Heating | Induction Heating | Adhesive Mighty Grip | Adhesive DENATITE |
| Connection Time | Seconds | Oscillation: 10 Holding: 50 | Oscillation: 10 Holding: 50 | Application: Several Minutes Hardening: 540 | Application: Several Minutes Hardening: 540 |
| Gap | mm | 8 | 6 | - | - |
| Pressure Applied | kN | 0.3 | 0.3 | Not Measured | Not Measured |
| Current Value | mA | 1080 | 865 | - | - |
| Amplitude | µm | - | - | - | - |
| Maximum Load | kN | 7.45 | 9.57 | 4.19 | 2.88 |
| Tensile Shearing Strength | MPa | 29.8 | 38.3 | 16.8 | 11.5 |

In Table 1, the term "Holding" in the connection time field indicates the time taken for fixation after welding or adhesion.

Regarding the pressure applied of Comparative Examples 1 and 2, an adhesive was applied to a thickness of 0.3 mm, and a spacer of φ 0.15 mm was interposed, and then the members were bonded together with a pressure applied to the thickness.

Table 1 can confirm that the tensile shearing strength of Example 1 is higher than that of Comparative Example 1 by about 80 %, and is higher than that of Comparative Example 2 by about 160 %.

The tensile shearing strength of Example 2 is higher than that of Comparative Example 1 by about 130 %, and is higher than that of Comparative Example 2 by about 230 %. Thus, it can be verified that the connection strengths of Examples 1 and 2 are each higher than those of the comparative examples in which adhesives are used.

### Reference Signs List

- 1: Thermoplastic resin
- 2: Fiber material (heating element)
- 3: Fiber reinforced resin member (Member to be connected)
- 4: Self-piercing rivet
- 10, 10A: Connection structure
- C: Induction coil
- P: Punch
- K: Position of superposition
- Q: Pressure

## Claims

1. A method for connecting members together, the method being adapted to connect two or more members together at a position of superposition, at least one of the two or more members being a fiber reinforced resin member (3) containing a thermoplastic resin (1) and also containing a reinforcing fiber material (2) that serves as a heating element in the thermoplastic resin (1), the method comprising:
temporarily joining the two or more members together at the position of superposition using a self-piercing rivet (4) before heating the members at the position of superposition; and
pressing the members against each other while heating the members at the position of superposition using one of induction heating or dielectric heating and thus melting the thermoplastic resin (1) with heat generated from the fiber material (2) that serves as the heating element, thereby connecting the members together.

2. The method for connecting members together according to claim 1, wherein the fiber material (2) contains one of carbon fibers, metal fibers, or ceramic fibers, or a mixture of two or more of the fibers.

## Patentansprüche

1. Verfahren zum Verbinden von Teilen, wobei das Verfahren darauf ausgelegt ist, zwei oder mehrere Teile an einer Überlagerungs-Position miteinander zu verbinden, wobei zumindest eines der beiden oder mehreren Teile ein faserverstärktes Harzteil (3) ist, das ein thermoplastisches Harz (1) und außerdem ein verstärkendes Fasermaterial (2) enthält, das als ein Heizelement in dem thermoplastischen Harz (1) dient, wobei das Verfahren Folgendes aufweist:
temporäres Verbinden der beiden oder mehreren Teile an der Überlagerungs- Position unter Verwendung einer Stanzniete (4) vor einem Aufwärmen der Teile an der Überlagerungs-Position; und
Pressen der Teile gegeneinander, während die Teile an der Überlagerungs-Position unter Verwendung von entweder Induktionserwärmung oder dielektrischer Erwärmung erwärmt werden, wodurch das thermoplastische Harz (1) durch die von dem als das Heizelement fungierenden Fasermaterial (2) erzeugte Wärme schmilzt, wodurch die Teile miteinander verbunden werden.

2. Verfahren zum Verbinden von Teilen nach Anspruch 1, wobei das Fasermaterial (2) entweder Kohlenstofffasern, Metallfasern oder Keramikfasern, oder eine Mischung aus zwei oder mehreren der Fasern enthält.

## Revendications

1. Procédé de connexion d'éléments ensemble, le procédé étant adapté pour connecter deux ou plusieurs éléments ensemble à une position de superposition, au moins un des deux ou plusieurs éléments étant un élément de résine renforcée de fibres (3) contenant une résine thermoplastique (1) et contenant également un matériau de fibres de renforcement (2) qui sert comme un élément de chauffage dans la résine thermoplastique (1), le procédé comprenant :
la jonction temporaire des deux ou plusieurs éléments ensemble à la position de superposition en utilisant un rivet auto-perçant (4) avant le chauffage des éléments à la position de superposition ; et
la compression des éléments les uns contre les autres tout en chauffant les éléments à la position de superposition en utilisant un d'un chauffage par induction ou chauffage diélectrique et faisant ainsi fondre la résine thermoplastique (1) avec la chaleur produite à partir du matériau de fibres (2) qui sert comme l'élément de chauffage, connectant par-là les éléments ensemble.

2. Procédé de connexion d'éléments ensemble selon la revendication 1, dans lequel le matériau de fibres (2) contient une parmi des fibres de carbone, fibres de métal, ou fibres de céramique, ou un mélange de deux ou plusieurs des fibres.
